# EUROPÄISCHE PATENTSCHRIFT

(11) **EP 3 797 029 B1**
(45) Veröffentlichungstag und Bekanntmachung des Hinweises auf die Patenterteilung: **29.10.2025**
(21) Anmeldenummer: 19726646.3
(22) Anmeldetag: 22.05.2019
(51) Int. Cl.: B29C 70/56

(54) **VERFAHREN ZUR HERSTELLUNG EINES FASERVERSTÄRKTEN BAUTEILS SOWIE VORRICHTUNG ZUR DURCHFÜHRUNG DES VERFAHRENS**
METHOD FOR PRODUCING A FIBER-REINFORCED COMPONENT AND DEVICE FOR CARRYING OUT THE METHOD
PROCÉDÉ DE FABRICATION D'UNE PIÈCE RENFORCÉE PAR DES FIBRES AINSI QUE DISPOSITIF POUR METTRE EN OEUVRE LE PROCÉDÉ

(30) Priorität: 22.05.2018 DE 102018208009
(43) Veröffentlichungstag der Anmeldung: 31.03.2021
(73) Patentinhaber: UBC Composites GmbH, 71711 Murr (DE)
(72) Erfinder: BRÄUTIGAM, Ulf, 71672 Marbach (DE)
(74) Vertreter: Grünecker Patent- und Rechtsanwälte PartG mbB
(86) Internationale Anmeldenummer: PCT/EP2019/063237
(87) Internationale Veröffentlichungsnummer: WO 2019/224260

(56) Entgegenhaltungen:
- EP-A1- 0 480 652
- EP-A2- 0 394 081
- EP-A2- 0 395 036
- WO-A2-2005/033390
- DE-A1- 10 259 883
- US-B1- 6 174 483

## Beschreibung

Die vorliegende Erfindung betrifft ein Verfahren zur Herstellung eines faserverstärkten Bauteils.

Die Verwendung von harzgetränkten Fasermaterialien zur Herstellung von faserverstärkten Bauteilen ist im Stand der Technik hinlänglich bekannt.

In der EP 2 813 539 A1 wird ein Verfahren beschrieben, bei dem ein Fasermaterial bereitgestellt wird. Dieses wird mit einem Harz getränkt, um ein so genanntes Prepreg-Material herzustellen. Später wird dieses mit Harz getränkte Fasermaterial (Prepreg-Material) unter Temperatur und Druck ausgehärtet, um verschiedenste Bauteile herzustellen.

In der EP 2 589 475 A1 ist beispielsweise ein Verfahren beschrieben, wobei Filamente von einer Rolle zu einem flächigen Faserabschnitt verarbeitet werden, welcher dann mit einer Harzzusammensetzung getränkt wird. Dieses mit Harz getränkte Fasermaterial wird dann auf eine weitere Rolle aufgerollt. Von dieser weiteren Rolle kann dann das Prepreg-Material abgerollt werden und zu Abschnitten geschnitten werden, um daraus ein Bauteil herzustellen.

In der EP 03 656 77 A1 ist ein Verfahren beschrieben, bei dem aus dem Prepreg-Material ein faserverstärktes Bauteil hergestellt wird. Das Prepreg-Material wird bei dem in diesem Dokument beschriebenen Verfahren auf ein Wabenstrukturmaterial aufgelegt, danach erhitzt und verfestigt, um das Bauteil zu bilden.

Weiterer relevanter Stand der Technik ist in folgenden Dokumenten offenbart: EP 0 480 652 A1, EP 0 395 036 A2, DE 102 59 883 A1, EP 0 394 081 A2, US 6 174 483 B1 und der WO 2005/033390 A2.

Um einen hohen Durchsatz bei der Herstellung des Prepreg-Materials zu gewährleisten, wird das Fasermaterial oft mit hoher Geschwindigkeit durch die Tränkungsstation geführt, in der es mit Harz getränkt wird. Auch wird das Prepreg-Material oftmals mit hoher Geschwindigkeit wieder aufgerollt.

Durch die hohe Geschwindigkeit oder auch durch andere verfahrensbedingte Umstände kann es vorkommen, dass in dem fertigen faserverstärkten Bauteil Strukturunregelmäßigkeiten oder optisch unschöne Oberflächenbereiche vorkommen.

Ausgehend davon ist es Aufgabe der vorliegenden Erfindung ein Verfahren anzugeben, mit dem Unregelmäßigkeiten in dem Prepreg-Material reduziert oder sogar ausgeschlossen werden.

Zur Lösung des oben beschriebenen Problems wird ein Verfahren mit den Merkmalen von Anspruch 1 angegeben.

Zudem wird eine Vorrichtung zur Durchführung des erfindungsgemäßen Verfahrens angegeben. Die Vorrichtung hat die Merkmale von Anspruch 9.

Die Erfinder der vorliegenden Erfindung haben festgestellt, dass es möglich ist, Unregelmäßigkeiten in dem mit Harz getränkten Fasermaterial dadurch zu reduzieren bzw. zu beseitigen, dass das Fasermaterial derart gestreckt wird, dass sich die Rovings in deren Längsrichtung ausrichten.

Als Roving wird vorliegend ein Bündel bzw. Strang von Multifilamentgarn aus parallel angeordneten Filamenten bezeichnet. Ein Roving kann jedes garnartige Material, auch wenn es nur auf einem einzigen Filament aufgebaut ist, gesehen werden.

Durch den Herstellungsprozess des mit Harz getränkten Fasermaterials werden die sich in einer Richtung nebeneinander erstreckenden Rovings gepresst, gedreht bzw. verzogen.

Wenn das Prepreg Material derart gestreckt wird, dass sich die in Längsrichtung nebeneinander verlaufenden Rovings ausrichten, wird eine verbesserte Oberflächenqualität bereitgestellt. Zum einen kann der dann im Wesentlichen begradigte Verlauf der Rovings einen besseren Krafteintrag gewährleisten. Zum anderen wird dadurch auch die Optik verbessert, weil die Stellen, an welchen die Rovings gepresst, gedreht bzw. verzogen waren unschöne Reflektionseigenschaften, insbesondere bei Tageslicht aufweisen. Durch das Strecken wird die Anzahl dieser Bereiche mit diesen unschönen Reflektionen reduziert und vorzugsweise ganz vermieden. Insbesondere ist es günstig die Streckung solange durchzuführen bis die Anzahl der Bereiche mit den unschönen Reflektionen unter einem vorgegebenen Grenzwert liegen.

Beispiele für ein Harzmaterial sind Polyester, Polyurethan, Phenol, Cyanatester, Epoxid oder eine Mischung davon. Das Harzmaterial kann aus diesen Komponenten bestehen oder weitere Additive beinhalten.

Somit kann der Ausschuss an fertigen Bauteilen minimiert werden.

Es hat sich als günstig herausgestellt, dass das mit Harz getränkte Fasermaterial während das Streckens in einer planaren Konfiguration angeordnet ist. So wird zum Beispiel ein planarer Bogen des mit Harz getränkten Fasermaterials in die Vorrichtung eingelegt. Auf diesen planaren Bogen wird z.B. lediglich auf dessen Ende/n eine Zugkraft ausgeübt, sodass sich die Rovings in deren Längsrichtung ausrichten. Wenn das mit Harz getränkte Fasermaterial von einer Rolle, z.B. einer Rolle angeliefertem Prepreg Material, zugeführt wird, ist der zu streckende Abschnitt des Material im wesentlichen planar.

Gemäß einer Weiterbildung der Erfindung wird während des Streckens lediglich in einen einzigen Endbereich, oder zwei einander entgegengesetzte Endbereiche der entsprechenden Rovings eine Streckkraft eingetragen und/oder im wesentliche keine vertikale Druckkraft auf den zu streckenden Abschnitt des Fasermaterials ausgeübt. Günstiger weise wird der Abschnitt des zu streckenden Fasermaterials derart gestreckt, wenn dieser einseitig auf einer Unterlage aufliegt, oder freitragend aufgespannt ist. Es wirken während des Streckens z.B. keine Umform- oder Druckelemente auf den zu streckenden Abschnitt des Fasermaterials.

Erfindungsgemäß wird zumindest vor und/oder während des Streckens eine Erwärmung des Fasermaterials durchgeführt, bei der das Harz, mit dem das Fasermaterial getränkt ist, zumindest teilweise aufgeweicht wird. Ein solches Erwärmen kann auch kurz vor dem Strecken, z.B. solange vor dem Strecken, bis das Harz so aufgeweicht ist, dass sich die Rovings bei Ausübung von Zug ausrichten können, begonnen werden.

Bevorzugte Temperaturen für das Erwärmen sind Temperaturen kurz unter dem Schmelzpunkt, am Schmelzpunkt oder leicht über dem Schmelzpunkt des verwendeten Harzes. Als Harz kann eine einzelne Komponente, beispielsweise ein Polymer oder auch eine Mischung einzelner Komponenten z.B. unterschiedlicher Polymere ggf. auch mit weiteren Additiven verwendet werden.

Bevorzugte Temperaturbereiche für das Erwärmen sind zwischen 25 und 130°C. Weitere vorteilhafte Werte sind 40, 55, 70, 80, 90, 100, 115, 125°C. Die entsprechenden Werte können jeweils für sich obere und untere Grenzen bilden. In Abhängigkeit des verwendeten Systems, insbesondere der Harzzusammensetzung sind die zuvor genannten Temperaturen vorteilhaft. Über die Temperatur kann die Viskosität eingestellt werden. Diese Werte können jeweils für sich obere und untere Grenzen bilden.

Es hat sich als günstig herausgestellt, dass ein Erwärmen für eine Dauer von zwischen 1 und 50 Minuten durchgeführt wird. Weitere vorteilhafte Werte sind 10, 20, 25, 30, 35, 40, 45 Minuten. Diese Werte können jeweils für sich obere und untere Grenzen bilden.

Die Temperaturen in Verbindung mit den Erwärmungsdauern bilden einen optimalen Kompromiss in Bezug auf Schnelligkeit des Verfahrens und Leichtigkeit des Streckens.

Nachdem das mit Harz getränkte Fasermaterial auf die zuvor genannte Temperatur gebracht wurde, und z.B. auch auf dieser Temperatur gehalten wird, ist es günstig, das Material im Bereich von 1 bis 30 Minuten, insbesondere 5, 10, 15, 20, 25 Minuten zu strecken. Diese Werte können jeweils für sich obere und untere Grenzen bilden. Sollte während des Streckens keine aktive Erwärmung stattfinden, sollte das Strecken insbesondere kurz nach dem Erwärmen bzw. unmittelbar nach dem Erwärmen durchgeführt werden.

Durch die zuvor genannten Streckdauern kann erreicht werden, dass sich die Rovings bestmöglich ausrichten ohne die Verfahrensdauer unnötig zu verlängern.

Als mit Harz getränktes Fasermaterial dient ein Gewebe aus Rovings mit Schuss- und Kettfäden. Für die spätere Bauteilfestigkeit ist es günstig gewebte Fasermaterialien vorzusehen, die mit Harz getränkt sind, so dass die Rovings Schuss- und Kettfäden bilden. Die Kettfäden sollen im Folgenden die Längsrichtung des Gewebes definieren und die Schussfäden die Querrichtung des Gewebes. Die Kett- und Schussfäden sind vorzugsweise senkrecht zueinander ausgerichtet.

Zumindest einer der Gruppen aus Schuss- bzw. Kettfäden, insbesondere beide der Gruppen Schuss- und Kettfäden, kann mit dem erfindungsgemäßen Verfahren gestreckt werden. Denn in Abhängigkeit der Anwendung kann es auch günstig sein, dass lediglich Schuss- oder Kettfäden gestreckt werden; oder dass sowohl die Schuss- als auch die Kettfäden gestreckt werden. Letztere Verfahrensführung kompliziert zwar das Verfahren in der Hinsicht, dass die Streckung zumindest in zwei Richtungen durchgeführt werden muss. Die Materialqualität der fertigen Bauteile kann hier jedoch bedeutend verbessert werden.

Erfindungsgemäß wird das Strecken des Fasermaterials mittels Reibung durchgeführt wird. Diese Reibung kann auf überstehende Enden der sich in zumindest einer Richtung nebeneinander erstreckenden Rovings ausgeübt werden. Ein Abschnitt eines Fasermaterials, auch wenn es von der Rolle kommt, kann sowohl in Längsrichtung und/oder auch in Querrichtung überstehende Enden aufweisen. Bei diesen überstehenden Enden stehen die Rovings von dem Material ab. Somit können dort die einzelnen Rovings am besten gegriffen werden und gestreckt werden.

Aufgrund des Harzes, insbesondere wenn dieses erwärmt wurde, kann durch eine translatorische Bewegung einer Streckoberfläche eines Streckelementes eine Reibungskraft auf die entsprechenden Enden ausgeübt werden, welche z.B. ansonsten frei auf dieser Streckoberfläche aufliegen. Hierdurch können die Rovings in der Längsrichtung ausgerichtet werden.

Durch das Strecken mittels Reibung kann eine einfache Verfahrensweise bereitgestellt werden. Wenn die Enden frei auf dieser Streckoberfläche aufliegen, müssen nicht die gesamten Enden mit zwei Backen der Klemmleiste o.Ä. gehalten werden. Diese Streckoberfläche kann translatorisch, entgegen der Verlaufsrichtung der Filamente, bewegt werden.

Erfindungsgemäß sind die überstehenden Enden des mit Harz getränkten Fasermaterials freie Enden, welche frei von Fasermaterial abstehen und dieses begrenzen. Diese Enden sind kurze Enden, und sind derart frei gelagert, dass sich diese während des Streckens entdrehen können, um die beim Strecken generierten Spannungen abzubauen.

Die überstehenden Enden der Rovings werden freigelegt, indem ein oder mehrere quer zu diesen Enden der Rovings verlaufenden Schuss oder Kettfäden entfernt werden.

Der Materialabschnitt weist üblicherweise ein gerade abgeschnittenes Ende und demnach eine gerade Endkannte auf. Damit die Streckkraft besser in den Abschnitt eingebracht werden kann, wird zumindest ein quer zu den Enden der zu streckenden Rovings verlaufendes Roving (in Abhängigkeit der Ausrichtung zumindest ein Schuss bzw. Kettfaden) entfernt. Vorteilhafterweise werden mehrere, insbesondere 2, 5 bzw. 10 quer verlaufende Rovings entfernt.

Die Streckkraft wird dann lediglich über die freiliegenden Enden, wo die quer verlaufenden Rovings entfern sind, eingetragen. Das Entfernen der Rovings kann händisch oder durch einen automatisierten Prozess geschehen. Hierbei wird nach Einbringen des zu streckenden Abschnittes, das zu streckende Ende detektiert und mittels eines Roboters die quer verlaufenden Roving(s) entfernt.

Insbesondere ist es günstig, dass die zu streckenden Rovings zumindest während des Streckens an deren Ende, das dem Ende, auf das die Reibung ausgeübt wird, gegenüberliegt, fixiert werden. Eine solche Fixierung kann mit einem Klemmelement erreicht werden, das beispielsweise zwei Backen aufweist, welche nach Klemmung zwischen sich zumindest die Enden der Rovings aufnehmen. Es ist nicht notwendig, dass die Rovings an deren freien Ende fixiert gehalten werden. Es kann auch eine Ausgestaltung vorgesehen sein, bei der ein dem Ende des Materials, auf das die Streckkraft ausgeübt wird, gegenüberliegender Materialbereich fixiert gehalten wird.

Durch die Bereitstellung solcher Klemmbacken jedenfalls können eine ganze Reihe von nebeneinanderliegenden Rovings gleichzeitig gestreckt werden.

Alternativ kann jedoch auch jedes einzelne Roving mit einem Greifelement gegriffen werden und einzeln gestreckt werden. Das Strecken kann demnach so durchgeführt werden, dass während des Streckvorgangs eine ganze Reihe von nebeneinanderliegenden Rovings gleichzeitig gestreckt werden, wie es in Bezug auf die Streckoberfläche zuvor beschrieben wurde oder, dass selektiv einzelne Rovings, die beispielsweise vorher festgelegt worden sind, weil diese z.B. als verdreht identifiziert wurden, gegriffen werden und gestreckt werden.

Auch so kann die Qualität des Endprodukts verbessert werden.

Die Reibung, die auf die überstehenden Enden ausgeübt wird, wird über eine Streckoberfläche eines Rollenelementes eingetragen. Das Rollelement kann in Längsrichtung zu den zu streckenden Rovings gedreht werden. Hierbei liegen die Rovings z.B. frei auf dem Rollelement auf.

Alternativ zu diesem Rollelement aber vorliegend aber nicht beansprucht kann auch ein translatorisch verschiebbares Streckelement vorgesehen sein, mit einer Streckoberfläche, die translatorisch in Längsrichtung der zu streckenden Rovings verschoben werden kann. Auf dieser Streckoberfläche des translatorisch verschiebbaren Streckelementes liegen die zu streckenden Rovings insbesondere frei auf.

Durch die translatorische Bewegung des translatorisch verschiebbaren Streckelementes bzw. über die rotatorische Bewegung des Rollelementes wird zum Beispiel, vermittelt über das aufgeweichte Harz, eine Streckkraft auf die Rovings ausgeübt, um diese in Längsrichtung auszurichten.

Es hat sich als praktisch herausgestellt, dass ein zylindrisches, insbesondere rundes oder eckiges Rollelement verwendet wird.

Gemäß einer günstigen Weiterbildung der Erfindung kann dieses Rollelement bzw. auch das translatorisch verschiebbare Streckelement beheizt sein. Diese Heizung kann als zweite Heizung zusätzlich zu einer zuvor beschrieben ersten Heizvorrichtung vorgesehen sein, die das Fasermaterial erwärmt, dass der Harz zumindest aufgeweicht wird.

Durch die Beheizung kann eine weiter verbesserte Streckung erreicht werden.

Insbesondere kann über die Steuerung dieser zweiten Heizung, die auch als einzige Heizvorrichtung vorgesehen sein kann, wenn diese z.B. nur, bzw. unterschiedlich einzelne Bereiche in deren Längsrichtung beheizt, selektiv die Konsistenz des Harzes variiert werden. So kann das Strecken des Fasermaterials selektiv beeinflusst werden.

Gemäß einer Weiterbildung der Erfindung kann für das Stecken der Schussfäden ein von dem zum Strecken der Kettfäden unterschiedliches Streckelement vorgesehen sein.

Diese voneinander unterschiedlichen Streckelemente sind beispielsweise in der Ebene des Fasermaterials senkrecht zueinander angeordnet, wobei das Strecken der Schuss- und Kettfäden über die verschiedenen Rollelemente gleichzeitig oder simultan geschehen kann.

Die zumindest zwei Streckelemente können auch in deren Geometrie unterschiedlich sein. Es kann z.B. ein rotatorisch bewegbares Steckelement, wie das zuvor beschriebene Rollelement oder ein translatorisch bewegbares Steckelement vorgesehen sein.

Die Kettfäden können vor, nach oder während des Streckens der Schussfäden mittels des Verfahrens gestreckt werden.

Es hat sich als günstig herausgestellt, dass nach den Strecken ein Kühlschritt durchgeführt wird, bei dem das gestreckte, mit Harz getränkte Fasermaterial, welches ein Halbzeug zur Herstellung eines späteren Bauelementes bilden kann, abgekühlt wird, insbesondere auf Raumtemperatur.

Eine Abkühlgeschwindigkeit beträgt hierbei vorteilhafterweise zwischen 0,5 und 10°C pro Minute. Weitere vorteilhafte Werte sind 1; 1,5; 2,5; 3; 5; 7; 10°C pro Minute. Die entsprechenden Werte können jeweils für sich obere und untere Grenzen bilden.

Es kann nach dem Strecken und/oder nach dem Kühlen ein aktives Entspannen des gestreckten, mit Harz getränkten Fasermaterials durchgeführt werden. Nach einem solchen Strecken sind oftmals noch Spannungen in dem Fasermaterial vorhanden. Das Strecken wurde durchgeführt, um die Ausrichtung der Rovings zu verbessern. Um die Spannungen wieder zu beseitigen, ist es günstig ein aktives Entspannen durchzuführen. Dies kann unmittelbar nach dem Strecken und vor dem Kühlen oder aber auch nach dem Strecken und vor dem Kühlen durchgeführt werden. Das Entspannen kann mittels Ultraschall und/oder mittels Rüttelns durchgeführt werden oder mit jeder anderen Vorrichtung, die ein Entspannen des Materials ermöglicht.

Das Verfahren kann so durchgeführt werden, dass vor dem Strecken eine auf dem mit Harz getränkten Fasermaterial vorgesehene Schutzfolie entfernt wird. Dieselbe Schutzfolie oder eine andere, z.B. neue, unbenutzte Schutzfolie kann nach dem Strecken des Fasermaterials wieder auf dieses aufgebracht werden. Insbesondere wird eine solche Schutzfolie auf beiden Seiten des Fasermaterials (z.B. oben und unten) vorgesehen und wird auch wieder auf beide Seiten aufgebracht. Alternativ kann eine solche Schutzfolie auch nur auf einer Seite vorgesehen sein und/oder auf einer Seite aufgebracht werden. Das Verfahren kann auch so durchgeführt werden, dass nur eine von zwei Schutzfolien, die beidseitig auf dem Fasermaterial aufgebracht sind, entfernt wird, und die andere Folie während des Streckens an dem Material haften bleibt.

Mittels einer solchen Schutzfolie wird das Halbzeug vor Umwelteinflüssen geschützt und transportfähig gehalten.

Das Prepreg-Material wird beispielsweise auf einer Rolle angeliefert, wobei das auf der Rolle aufgewickelte Prepreg-Material beidseitig mit einer solchen Schutzfolie versehen ist. Für das Strecken des Materials wird die Schutzfolie von einer, vorzugsweise von beiden Seiten entfernt und nach dem Strecken kann dieselbe Schutzfolie oder eine andere Schutzfolie wieder einseitig oder auf beide Seiten des Materials aufgebracht werden.

Das Entfernen der Schutzfolie kann auch so geschehen, dass in einem automatischen Prozess die Schutzfolie ober- und unterseitig abgehoben wird und mit der gleichen Geschwindigkeit wie das Prepreg Material ohne Schutzfolie in Längsrichtung gleichzeitig mit diesem, jedoch beabstandet davon bewegt wird und später, nach dem Strecken, wieder auf dieses Prepreg Material aufgelegt wird.

In dem Bereich, wo die Schutzfolie beabstandet von dem Prepreg-Material geführt wird, kann das Prepreg-Material dann gestreckt werden. Hierzu kann z.B. die Transportvorrichtung, die das Prepreg-Material führt, angehalten werden und das Material wird in Querrichtung zur Transportrichtung gestreckt. Nach der Streckung wird das Material weiter gefördert und die Schutzfolie wieder mit dem gestreckten Material zusammengebracht. Danach kann das Prepreg-Material aufgerollt werden.

Alternativ zu dem anschließenden Aufrollen kann das Prepreg-Material auch unmittelbar nach dem Strecken ohne diese wieder aufzurollen, zugeschnitten werden. Dies kann in einer Schneidestation geschehen, die der Streckstation nachgeordnet ist.

Dieser Materialzuschnitt wird dann z.B. im weiteren Verfahren für die Herstellung des faserverstärkten Bauteils verwendet.

Dieser Zuschnitt kann auch mit weiteren Zuschnitten zu einem Halbzeug laminiert werden, das dann z.B. in einem Autoklaven unter Temperatur und/oder Druck gebacken wird, um das fertige faserverstärkte Bauteil zu bilden.

Es ist vorteilhaft, wenn die Rolle bzw. der Zuschnitt aus einem Lager mit einer Vielzahl von vorkonfektionierten mit Harz getränkten Fasermaterial Einheiten entnommen wird und einer Streckvorrichtung zugeführt wird. Die Einheiten von mit Harz getränkten Fasermaterial, z.B. Einheiten von Prepreg, werden oftmals bevor diese weiter verwendet werden in einem Lager gehalten. Wenn das entsprechende Bauteil hergestellt wird, wird dieses Material just-in-time mit dem erfindungsgemäßen Verfahren gestreckt. Es hat sich als günstig herausgestellt, dass während, vor oder nach dem Strecken eine Inspektion, insbesondere optische Inspektion, durchgeführt wird.

So kann instantan die Veränderung in Material beobachtet werden und z.B. die Dauer des Streckens und /oder andere der zuvor genannten Parameter (Erwärmen etc.) entsprechend variiert werden. Es kann inspiziert werden, inwieweit z.B. die Anzahl der Bereiche mit den unschönen Reflektionen unter einem vorgegebenen Grenzwert liegen und/oder sonstige vorgegebene Eigenschaften bzw. Bedingungen durch das Strecken erfüllt sind. Es kann z.B. mit einem automatisierten Bildverarbeitungsprogramm die Oberfläche vor und nach dem Strecken inspiziert werden und der Streckprozess mittels einer Regelung automatisch so durchgeführt werden, dass die Anzahl der Bereiche mit den unschönen Reflektionen unter einem vorgegebenen Grenzwert liegen und/oder sonstige vorgegebene Eigenschaften bzw. Bedingungen durch das Strecken erfüllt sind.

Neben den Schritten der automatisierten Inspektion in Verbindung mit dem Strecken können auch einzelne oder weitere Teile bzw. Schritte des Verfahrens automatisiert erfolgen, insbesondere mittels einer Regelung durchgeführt werden.

Zum Beispiel kann das Zuführen des Material automatisiert erfolgen. Auch kann in einer automatischen Weise das Strecken, Erwärmen, Kühlen und/oder Entfernen des Materials aus der Streckvorrichtung erfolgen.

Das erfindungsgemäße Verfahren ist besonders geeignet zu Herstellung von faserverstärkten Bauteilen für ein Kraftfahrzeug. Das Kraftfahrzeugbauteil weist z.B. eine Class A Oberfläche auf, wobei die Class A Oberfläche eine Sichtcarbonfläche ist. Auch jede andere Sichtcarbonfläche, bei der es auf einen optisch einwandfreien Effekt ankommt, kann mittels des erfindungsgemäßen Verfahrens hergestellt werden. Somit ist das Bauteil nicht auf den Kraftfahrzeugbereich beschränkt. Class A ist eine in der Automobilindustrie übliche Definition der Qualität von Bauteilen/ Oberflächen. Es wird unterschieden in Class-A, Class-B und Class-C. Class-A sind exponierte Außenhautbauteile wie z.B. Kotflügel, Hauben, Dächer. Class A Oberflächen sind mithin sichtbare (Freiform)-Flächen im Exterieur- und Interieur-Bereich. Mit Class A bezeichnete Flächen weisen z.B. Krümmungsstetigkeit auf.

Gemäß einem nebengeordneten Aspekt der Erfindung wird auch eine Vorrichtung zur Durchführung des erfindungsgemäßen Verfahrens angegeben. Die Vorrichtung weist zumindest ein Streckelement auf, welches konfiguriert ist das Fasermaterial zu strecken, so dass sich die Filamente in deren Längsrichtung ausrichten.

Ein solches Streckelement kann durch das zuvor beschriebene Rollelement gebildet sein oder alternativ auch durch das zuvor beschriebene, translatorische bewegbare Streckelement. Das Streckelement weist z.B. eine Streckoberfläche auf, auf der die überstehenden Enden der Rovings des mit Harz getränkten Fasermaterials frei aufliegen.

Gemäß einer vorteilhaften Weiterbildung der Vorrichtung kann ein Einspannelement vorgesehen sein, welches konfiguriert ist die Rovings an dem Ende, das dem Ende, an dem die Rovings mit dem Streckelement zusammenwirken, gegenüberliegt, zu fixieren. Ein solches Einspannelement kann das zuvor beschriebene Klemmelement sein, das beispielsweise zwei Backen aufweist, welche nach Klemmung zwischen sich zumindest die Enden der Rovings aufnehmen. Durch die Bereitstellung solcher Klemmbacken jedenfalls können eine ganze Reihe von nebeneinanderliegenden Rovings gleichzeitig gestreckt werden.

Soweit es sich bei dem Fasermaterial um ein Gewebe mit Kett- und Schussfäden handelt, können die zuvor beschriebenen, zumindest zwei Streckelemente vorgesehen sein, wobei eines die Kettfäden und das andere die Schussfäden streckt.

Vorzugsweise liegt jedem des ersten bzw. zweiten Streckelements ein entsprechendes Einspannelement gegenüber.

Die Streckelemente können in Kombination mit einer optional vorgesehenen Heizung zum Erwärmen des Materials und/oder mit einer Kühlvorrichtung zum Kühlen nach dem Strecken und/oder einer aktiven Entspannungseinrichtung eine Streckstation bilden.

Diese Streckstation kann einer Zuschneidestation nachgeordnet sein, welche konfiguriert ist aus dem gestreckten Fasermaterial ein Fasermaterialzuschnitt herzustellen. Aus diesem Zuschnitt wird dann nach Anwendung eines oder mehrerer weiterer Schritte(s), wie zum Beispiel das Backen im Autoklaven ein faserverstärktes Bauteil hergestellt.

Gemäß einem weiteren nebengeordneten Aspekt der Erfindung wird ein gestrecktes, faserverstärktes Bauteil angegeben, welches mit dem erfindungsgemäßen Verfahren hergestellt ist. Es kann auch das Zwischenprodukt, das gestreckte (z.B. noch nicht gebackene) Halbzeug, welches mit dem vorliegenden Verfahren hergestellt wurde, für sich die Erfindung bilden.

Das Bauteil kann insbesondere ein Kraftfahrzeugbauteil sein, kann aber auch jedes andere Bauteil im Bereich Luft- und Raumfahrttechnik bzw. Medizintechnik sein.

Insbesondere weist das Bauteil eine Oberfläche von mehr als 0,1 m², mehr als 0,5 m², mehr als 1 m², mehr als 10 m² auf.

Gerade bei so großen Bauteilen ist es schwierig eine Oberfläche in der Güte herzustellen. Deshalb ist bei solchen Bauteilen das Verfahren besonders bevorzugt.

Das Kraftfahrzeugbauteil kann insbesondere ein sichtbares Kraftfahrzeugbauteil, wie ein Kotflügel, ein Dach, eine Motorhaube, oder ein Spoiler sein.

Insbesondere wird es durch das Verfahren ermöglicht, dass dieses Bauteil ein Sichtkarbonbauteil ist, d. h. dieses Bauteil kann lediglich mit Klarlack beschichtet sein, so dass die Gewebestruktur visuell sichtbar ist.

Es kann nämlich die Gefahr reduziert werden, dass unschöne, optische Reflektionen aufgrund von gedrehten, gepressten bzw. verzogenen Rovings auftreten.

Durch das erfindungsgemäße Verfahren kann insbesondere sichergestellt werden, dass die durch Verdrillung und/oder Verzerrung der Rovings bei Streiflichteinfall gebildeten Reflektionen bzw. Reflexe auf eine Anzahl von unter 5/dm², insbesondere von unter 2/dm², ganz besonders von unter 1/dm² reduziert werden (dm² = Quadratdezimeter).

Diese Werte sind z.B. gemittelte Werte über eine Vielzahl von Ausschnitten mit beispielsweise 10 cm x 10 cm Fläche.

Bei der Verwendung von handelsüblichen in Massenproduktion hergestellten Prepreg Materialien für Class A Oberflächen, kann eine solche Oberflächenbrillianz nicht gewährleistet werden.

Bei konventionellem Prepreg-Abschnitten aus konventioneller Massenherstellung, wie Sie zur Herstellung der Bauteile verwendet werden, wird das Harzmaterial mit Druck eingebracht. Dadurch verdrillen und/oder verkannten einzelne Rovings. Nach dem Härten z.B. im Autoklaven verfestigt sich das Harz, die Verdrillung und/oder Verkanntung der Rovings bleibt jedoch erhalten.

Dies führt zu bei Streiflichteinfall gebildeten Reflektionen bzw. Reflexe, durch an diesen Verdrillungen und/oder Verkanntungen refelektiertem Licht.

Bei Bauteilen, bei denen nicht das erfindungsgemäße Streckverfahren durchgeführt wurde, ist nach dem Härten eine Anzahl von mehr als 50 Reflektionen bzw. Reflexen pro dm² üblich.

Somit enthalten die fertigen Bauteile, wie z.B. Motorhauben einen großen Anteil an Ausschuss.

Insbesondere bei Sichtcarbon Bauteilen ist es wichtig, dass das menschliche Auge keine oder nur sehr wenige Reflektionen bzw. Reflexe sieht.

Die für das zuvor genannte Verfahren beschriebenen Ausgestaltungen können jeweils auch auf die Vorrichtung ausgedehnt werden soweit beispielsweise von einem Schritt des Erwärmens die Rede ist, kann eine Heizeinrichtung vorgesehen sein, mit der das Erwärmen des Fasermaterials durchgeführt wird. Das Kühlen kann mit einer Kühleinrichtung geschehen.

Weitere vorteilhafte Ausgestaltungen der Erfindung werden anhand der nachfolgenden Ausführungsbeispiele in Verbindung mit der Zeichnung beschrieben. In dieser zeigen:
- Fig. 1: eine schematische Streckstation, wobei ein Streckelement als Rollelement ausgebildet ist;
- Fig. 1b: ein Ausschnitt einer alternativen Streckstation, wobei als Streckelement ein translatorisch verschiebbares Streckelement vorgesehen ist;
- Fig. 2: eine schematische Aufsicht auf die Ausführungsform aus Fig. 1a;
- Fig. 3: ein weiteres Ausführungsbeispiel, bei dem in der Streckstation Schuss- und Kettfäden des Fasermaterials gestreckt werden;
- Fig. 4: eine schematische Darstellung einer Vorrichtung, bei der das harzgetränkte Fasermaterial von einer Rolle angeliefert wird, gestreckt wird, zugeschnitten wird und später der fertige Zuschnitt entnommen werden wird oder werden kann, wobei alles in einer Linie und automatisiert durchgeführt wird;
- Fig. 5a: eine Aufsicht auf eine Vorrichtung, bei der die in Längsrichtung verlaufenden Rovings gestreckt werden;
- Fig. 5b: eine Aufsicht der Ausführungsform aus Fig. 5a;
- Fig. 5c: eine Seitenansicht der Vorrichtung aus Fig. 5a;
- Fig. 6a: eine weitere Ausführungsform, bei der die Schuss- und Kettfäden des Gewebes gestreckt werden;
- Fig. 6b: eine Aufsicht auf die Vorrichtung aus Fig. 6a;
- Fig. 6c: eine Querschnittsansicht der Vorrichtung aus Figur 6a entlang der Line B-B; und
- Fig. 6d: eine Querschnittsansicht der Vorrichtung aus Figur 6a entlang der Line A-A.

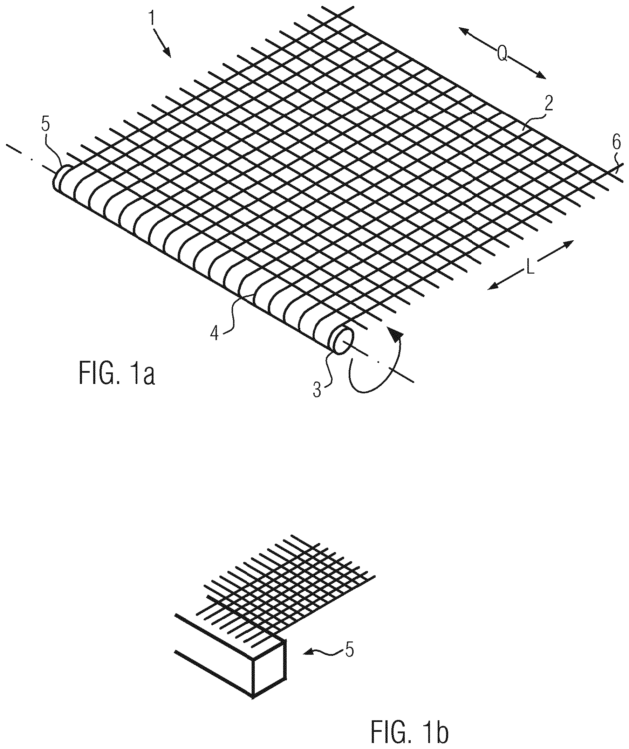

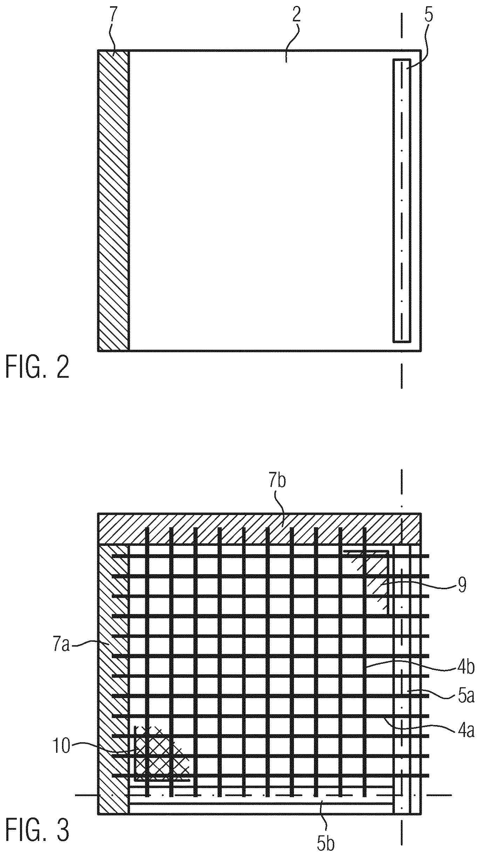

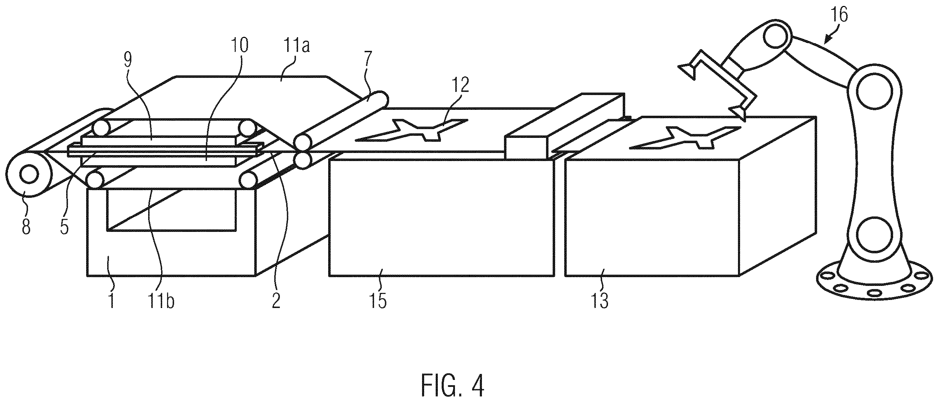

In Fig. 1a ist schematisch ein Ausschnitt einer Streckstation 1 dargestellt. Ein Abschnitt eines mit Harz getränkten Fasermaterials 2 ist so angeordnet, dass überstehende Enden 3 von sich in einer Richtung nebeneinander erstreckenden Rovings 4 auf einer Streckoberfläche eines Streckelements 5 lose, ohne zwischen einem weiteren Element gequetscht gehalten, aufliegen. An seinem entgegengesetzten Ende 6 ist das mit Harz getränkte Fasermaterial 2 in einem Einspannelement 7 (welches in der Figur 1 nicht dargestellt ist, siehe Fig. 2) fest eingespannt, so dass es in dessen Längsrichtung L nicht translatorisch bewegbar ist. Der Abschnitt des mit Harz getränkten Fasermaterials 2 kann ein Ende eines von einer Rolle 8 (vgl. Fig. 4, linke Seite) abgewickelten Abschnittes des mit Harz getränktes Fasermaterials 2 sein. Dieses mit Harz getränkte Fasermaterial 2 wird auch Prepreg genannt und kann ein Halbzeug darstellen.

In dem vorliegenden Ausführungsbespiel in Fig. 1a enthält das mit Harz getränkte Fasermaterial 2 ein Gewebe aus Rovings 4 mit Schuss- und Kettfäden. Schussfäden sollen im vorliegenden Ausführungsbeispiel die Rovings in Längsrichtung L des Abschnitts sein, wobei Kettfäden durch die Rovings 4 in Querrichtung Q des Abschnitts gebildet werden. Die Schuss- und Kettfäden können jedoch auch vertauscht sein, so dass die Schussfäden in Querrichtung zu dem Abschnitt und die Kettfäden in Längsrichtung ausgebildet sind. Anstelle eines Rollenmaterials, welches der Länge nach abgerollt wird und dessen Ende in die Streckstation 1 eingespannt wird, kann auch ein separater, flacher Materialabschnitt eines mit Harz getränkten Fasermaterials verwendet werden. Dieser kann quadratisch, rechteckig sein oder jede andere Form haben. Ein solcher Abschnitt kann eine Fläche von 0,5 bis 20 m² aufweisen. Hierbei sind auch folgende Werte möglich 1 m², 4 m², 6 m², 8 m², 10 m², 15 m². Die zuvor genannten Werte können jeweils für sich als obere und untere Grenzen eines bevorzugten Flächenbereichs dienen.

Gerade so große Abschnitte konnten bis hierher nicht in hoher Qualität so hergestellt werden, dass beim späteren fertigen Werkzeug bzw. Bauteil Unregelmäßigkeiten oder weniger Unregelmäßigkeiten vermieden wurden.

Die Streckstation ist demnach vorliegend z.B. so konfiguriert, dass Materialabschnitte mit den zuvor genannten Größen gestreckt werden können. Insbesondere betrifft die Größe den Bereich, der zwischen dem Steckelement 5 und dem Einspannelement 7 gehalten ist.

Als Streckelement 7 ist in dem Ausführungsbeispiel in Fig. 1a ein Rollelement vorgesehen. Das Rollelement hat vorliegend eine runde Form mit einer rotatorisch drehbaren Streckoberfläche. Es kann auch jedes andere Rollelement vorgesehen sein. Ein solches Rollelement weist zumindest eine Steckoberfläche auf und ist drehbar gelagert, so dass bei Drehung des Rollelements 7 die Streckoberfläche derart rotatorisch bewegt wird, dass die nebeneinanderliegenden Rovings gestreckt werden.

In Fig. 1b ist schematisch ein alternatives Ausführungsbeispiel eines Streckelements 5 vorgesehen. Dort ist ein translatorisch bewegbares Streckelement mit einer Streckberfläche dargestellt. Dieses Streckelement hat einen quadratischen Querschnitt. Als translatorisches Streckelement kann jedes Element vorgesehen werden, das eine Streckoberfläche aufweist, die translatorisch in Bezug auf die Längsrichtung L der nebeneinander ausgerichteten Rovings 4 bewegt wird. Sowohl durch die rotatorische Drehung aus Fig. 1a als auch durch die translatorische Streckung in Fig. 1b, wird auf die Enden des Fasermaterials 2 eine Kraft ausgeübt, so dass das Material gestreckt wird.

Insbesondere wird das Material vorher und/oder während des Streckens erwärmt, so dass das Harz, mit dem das Fasermaterial getränkt ist, aufgeweicht wird, insbesondere ist eine Erwärmungstemperatur von ca. 25 bis 130°C vorteilhaft. Weitere vorteilhafte Werte sind 40, 55, 70, 80, 90, 100, 115, 125°C. Die entsprechenden Werte können jeweils für sich obere und untere Grenzen bilden. In Abhängigkeit des verwendeten Systems, insbesondere der Harzzusammensetzung sind die zuvor genannten Temperaturen vorteilhaft. Diese Werte können jeweils für sich obere und untere Grenzen bilden.

Es hat sich als günstig herausgestellt, dass ein Erwärmen für eine Dauer von zwischen 5 und 50 Minuten durchgeführt wird. Weitere vorteilhafte Werte sind 10, 20, 25, 30, 35, 40, 45 Minuten. Diese Werte können jeweils für sich obere und untere Grenzen bilden.

Die Temperaturen in Verbindung mit den Erwärmungsdauern bilden einen optimalen Kompromiss in Bezug auf Schnelligkeit des Verfahrens und Leichtigkeit des Streckens.

Nachdem das mit Harz getränkte Fasermaterial auf die zuvor genannte Temperatur gebracht wurde und z.B. auch auf dieser Temperatur gehalten wird, ist es günstig das Material im Bereich von 1 bis 30 Minuten, insbesondere 5, 10, 15, 20, 25 Minuten zu strecken. Diese Werte können jeweils für sich obere und untere Grenzen bilden. Sollte während des Streckens keine aktive Erwärmung stattfinden, sollte das Strecken insbesondere kurz nach dem Erwärmen bzw. unmittelbar nach dem Erwärmen durchgeführt werden.

Durch die zuvor genannten Streckdauern kann erreicht werden, dass sich die Rovings 4 bestmöglich ausrichten ohne die Verfahrensdauer unnötig zu verlängern.

Das Erwärmen kann mit jeder Art von Heizung bzw. Heizeinrichtung geschehen. Das mit Harz getränkte Fasermaterial 2 kann z.B. über eine warme Oberfläche geführt werden oder auch mit Warmluft beaufschlagt werden. Warmluft kann beispielsweise mit einem Gebläse nach Art eines Föhnens eingetragen werden. Ein Beispiel einer Heizeinrichtung ist in Fig. 4 mit Bezugszeichen 9 dargestellt. In diesem Beispiel ist die Heizeinrichtung 9 als Plattenelement ausgebildet, das oberseitig an dem mit Harz getränkten Fasermaterial anliegt oder in dessen Nähe beabstandet von dem Fasermaterial vorgesehen ist, so dass es dieses erwärmen kann.

Weil diese Heizeinrichtung 9 als Plattenelement vorgesehen ist, ist dieses in Fig. 3 nur schematisch durch die Schraffur dargestellt, weil Figur 3 eine Aufsicht auf ein weiteres Ausführungsbeispiel zeigt.

Während und/oder nach dem Erwärmen wird dann das Strecken durchgeführt, indem das Streckelement 5 beispielsweise rotatorisch bzw. translatorisch bewegt wird, so dass die auf der entsprechenden Streckoberfläche des Streckelements aufliegenden freien Enden der Rovings 4 derart gezogen werden, dass sich die Rovings 4 in deren Längsrichtung ausrichten.

Das Strecken kann mit einer Dauer von 10 bis 30 Minuten, insbesondere 15, 20, 25 Minuten durchgeführt werden. Die entsprechenden Werte können jeweils für sich obere und untere Grenzen bilden.

Anstelle der in den Ausführungsbeispielen aus Fig. 1a und b dargestellten Streckelementen 5, in denen die Enden der Rovings im Wesentlichen über die gesamte Breite des Fasermaterials 2 gestreckt werden, können auch nur einzelne Abschnitte in dem Fasermaterial gestreckt werden, so dass nur bestimmte Bereiche von Enden mit einem Streckelement 5 zusammenwirken.

Alternativ können auch nur einzelne Rovings selektiv mit Greifern, z.B. nach Art einer Pinzette, gefasst und gestreckt werden.

Hierzu ist es z.B. vorteilhaft, dass mittels einer optischen Visualisierungseinrichtung und/oder einer Computerroutine automatisch bestimmt wird, an welchen Stellen Verdrehungen, Verpressungen oder Verzüge in dem Material eingetragen sind.

Diese Bestimmung der Lokalisierung von Unregelmäßigkeiten, die durch Verdrehungen, Verpressungen und/oder Verzüge in das Material eingetragen wurden, kann aber auch händisch erfolgen, indem eine Person sich das Material genau anschaut und die Stellen, an denen eine solche Verpressung, Verdrehung und/oder ein Verzug der Rovings auftritt, bestimmt.

Danach wirkt das Streckelement 5 dann auf die Rovings ein, bis zumindest die Anzahl der Defekte aufgrund von verpressten, verzogenen oder verdrehten Rovings unter einem bestimmten Grenzwert ist bzw. gänzlich abgestellt ist. Die Rovings sind insbesondere dann als gestreckt bzw. nicht mehr verdreht anzusehen, wenn optisch und/oder mit dem bloßen Auge bei Tageslicht und/oder Sonneneinstrahlung keine Unregelmäßigkeiten in der Oberfläche mehr zu erkennen sind.

Wenn das Prepreg Material derart gestreckt wird, dass sich die in Längsrichtung nebeneinander verlaufenden Rovings ausrichten, wird eine verbesserte Oberflächenqualität bereitgestellt. Zum einen kann der dann im Wesentlichen begradigte Verlauf der Rovings einen besseren Krafteintrag gewährleisten. Zum anderen wird dadurch auch die Optik verbessert, weil die Stellen, wo die Rovings gepresst, gedreht bzw. verzogen waren unschöne Reflektionseigenschaften, insbesondere bei Tageslicht, aufweisen. Durch das Strecken wird die Anzahl dieser Bereiche mit den unschönen Reflektionen reduziert und vorzugsweise ganz vermieden. Insbesondere ist es günstig die Streckung solange durchzuführen bis die Anzahl der Bereiche mit den unschönen Reflektionen unter einem vorgegebenen Grenzwert liegen.

In Fig. 2 ist eine schematische Aufsicht auf die Vorrichtungen aus Fig. 1a bzw. 1b dargestellt.

Hier ist zu erkennen, dass dem Streckelement 5 das Einspannelement 7 in der Ebene in der sich das Fasermaterial erstreckt, gegenüberliegt. Das Einspannelement 7 generiert in Längsrichtung L zu den Rovings 4 eine entgegengesetzte Kraft, entgegengesetzt zu der Kraft, die durch das Streckelement 5 auf die Rovings 4 ausgeübt wird. Dieses Einspannelement 7 kann durch Klemmbacken oder jegliche andere Art von Einspannung gewährleistet werden.

In einem alternativen Ausführungsbeispiel in Fig. 3 ist schematisch eine Situation dargestellt, bei der nicht nur die Fasern in einer einzigen Richtung, beispielsweise der Längsrichtung in Fig. 1a und 1b, insbesondere die Kettfäden gestreckt werden, sondern bei der sowohl die Kett- als auch die Schussfäden, insbesondere im Winkel von 90°, zueinander mittels entsprechendem Streckelement 5a und 5b gestreckt werden.

Hierbei werden jeweils die entsprechenden Enden der Rovings 4b, die die Kettfäden bilden, dies sind beispielsweise die in Fig. 3 von oben nach unten verlaufenden Fäden, von dem Streckelement 5b in Zusammenwirken mit dem Einspannelement 7b gestreckt.

Zudem werden jeweils die entsprechenden Enden der Rovings 4a, die die Schussfäden bilden, dies sind beispielsweise die in Fig. 3 von links nach rechts verlaufenden Fäden, von dem Streckelement 5a in Zusammenwirken mit dem Einspannelement 7a gestreckt. Bei dem Ausführungsbeispiel ist jeweils gegenüberliegend von dem ersten bzw. zweiten Streckelement 5a, 5b, das erste bzw. zweite Einspannelement 7, 7b vorgesehen.

Die entsprechenden Einspannelemente können die gleiche Ausgestaltung wie die für die Ausführungsbeispiele in Fig. 1a und 1b beschrieben, aufweisen.

Soweit nachfolgend für dieses Ausführungsbeispiel als auch für die weiteren Ausführungsbeispiele nichts Anderes beschrieben ist, sind auch für diese Ausführungsbeispiele die Ausgestaltungen, wie sie in Bezug auf die Ausführungsbeispiele in Fig. 1a, 1b beschrieben wurden, möglich. Auch können alle nachfolgend beschriebenen Aspekte, soweit dies nicht technisch unsinnig ist, mit den Ausführungsbeispielen aus Fig. 1a und 1b sowie allen anderen Ausführungsbeispielen kombiniert werden.

Auch bei dem vorliegenden Ausführungsbeispiel aus Figur 3 ist beispielsweise eine Heizeinrichtung 9 vorgesehen. Darüber hinaus kann auch hier eine Kühleinrichtung 10, wie sie in Figur 4 dargestellt ist, vorgesehen sein.

Die Kühleinrichtung 10 kann, wie in Fig. 4 gezeigt, auch aus einem Plattenelement ausgebildet sein, das dem Plattenelement, das die Heizeinrichtung 9 definiert, gegenüberliegt.

Durch Kühlen des Plattenelements kann dann eine Kühlung des gestreckten Materials nach dem Strecken durchgeführt werden. Alternativ oder zusätzlich kann auch ein Kaltluftföhn oder eine Flüssigkeitskühlung als Kühleinrichtung vorgesehen sein.

Es hat sich als günstig herausgestellt, dass nach den Strecken ein Kühlschritt durchgeführt wird, bei dem das gestreckte mit Harz getränkte Fasermaterial, welches ein Halbzeug zur Herstellung eines späteren Bauelementes bilden kann, abgekühlt wird, insbesondere auf Raumtemperatur.

Eine Abkühlgeschwindigkeit beträgt hierbei vorteilhafterweise zwischen 0,5 und 10°C pro Minute. Weitere vorteilhafte Werte sind 1; 1,5; 2,5; 3; 5; 7; 10°C pro Minute. Die entsprechenden Werte können jeweils für ich obere und untere Grenzen bilden.

Die Kühlung kann vor, während und/oder nach einem optionalen Entspannungsschritt durchgeführt werden.

Nach dem Streckschritt sind üblicherweise Spannungen in das getränkte Fasermaterial eingetragen worden. Auch diese Spannungen können sich ungünstig auf die Oberflächen und Zugbeschaffenheit des fertigen Bauteils auswirken. Deshalb ist es günstig, dass, wenn die entsprechenden Rovings 4 ausgerichtet sind, ein Entspannen stattfindet. Dies kann mit Rütteln oder Ultraschallbehandlung durchgeführt werden. Eine entsprechende Rütteleinrichtung oder Ultraschalleinrichtung ist in den vorliegenden Ausführungsbeispielen nicht bildlich dargestellt.

Eine Entspannungseinrichtung kann beispielsweise derart ausgestaltet werden, dass die Platten die die Heizeinrichtung 9 und/oder die Kühleinrichtung 10 bilden, mittels eines Motors rüttelnd bewegt werden oder mit hochfrequenter Vibration wie Ultraschall beaufschlagt werden. Es kann aber auch händisch an dem Material und/oder den Platten gerüttelt werden.

Dies kann vor einem möglichen Abkühlen, während oder nach einem möglichen Abkühlen geschehen.

Bei dem Ausführungsbeispiel aus Fig. 3 sind die senkrecht zueinander angeordneten Streckelemente 5a, 5b unabhängig voneinander rotatorisch bewegbar. Im Bereich des Kreuzungspunktes in Fig. 3 unten rechts kann jedoch auch ein Getriebe vorgesehen sein, das die beiden Streckeinrichtungen 5a, 5b miteinander bewegungskoppelt, so dass der Antrieb über eine Antriebswelle für beide Streckelemente geschehen kann.

Für das Ausführungsbeispiel aus Fig. 3 ist es günstig, dass nur einzelne Abschnitte, insbesondere quadratische Abschnitte in die Vorrichtung eingebracht werden. Es kann aber auch bei diesem Ausführungsbeispiel das Material von einer Rolle eingebracht werden.

In Fig. 4 ist ein weiteres Ausführungsbeispiel zu sehen, in welchem das Strecken und auch die nachfolgenden Beschneidungs- und Entnahmeschritte automatisiert oder semiautomatisiert erfolgen.

In dem Ausführungsbeispiel in Fig. 4 werden nur die entsprechenden Rovings, die in Querrichtung verlaufen, gestreckt, denn das mit Harz getränkte Folienmaterial wird von einer Rolle 8 abgerollt.

Im Zuge dessen wird eine Schutzfolie 11a bzw. 11b, die ober- bzw. unterseitig an dem mit Harz getränkten Fasermaterial 2 vorgesehen ist, von dem Material abgehoben. Die Schutzfolie 11a, 11b wird mit gleicher Geschwindigkeit wie das freigelegte mit Harz getränkte Fasermaterial 2 dann in Längsrichtung geführt und dann in dem Einspannelement 7 wieder auf die Oberfläche gedrückt.

Das Einspannelement 7 dient vorliegend somit auch als Schutzfolienanpresselement.

Im vorliegenden Fall ist das Einspannelement 7 demnach durch zwei einander gegenüberliegende Rollen ausgebildet, die die Folie auch durch die Streckvorrichtung durchziehen.

In der Streckstation 1 ist die als Heizplatte ausgebildete Heizeinrichtung 9 oberseitig auf dem mit Harz getränkten Fasermaterial vorgesehen und ein als Kühlplatte ausgebildetes Kühleinrichtung 10 unterseitig auf dem mit Harz getränkten Fasermaterial.

Das mit Harz getränkte Fasermaterial läuft zwischen den beiden Platten durch.

In Längsrichtung verlaufend sind hier zwei gegenläufige Rollen vorgesehen, die die Enden der querverlaufenden Rovings 4 zwischen sich aufnehmen und strecken. Als Streckelement kann aber auch jedes andere, z.B. die zuvor beschriebenen Streckelemente, vorgesehen sein.

Durch Erwärmen des Materials und Betätigen des Streckelementes durch rotatorische und/oder translatorische Bewegungen der Streckoberfläche können die nebeneinanderliegenden Rovings gestreckt werden.

Nach dieser Streckung kann das gestreckte Material wieder abgekühlt werden und wieder mit der Schutzfolie versehen werden.

In dem vorliegenden Beispiel wird aus dem Material in einer weiteren der Streckstation 1 nachgeordneten Zuschneidestation 15 ein Zuschnitt 12 ausgeschnitten. Ein solcher Zuschnitt kann über einen für die Textilindustrie an sich bekannten Mechanismus erfolgen, indem beispielsweise eine automatische Laserschneidvorrichtung ein vorbestimmtes Muster in das gestreckte Material schneidet.

In einer der Zuschneidestation 15 nachgeordneten Entnahmestation 13 können beispielsweise über einen Roboter 16 die Zuschnitte 12 entnommen werden.

Diese Zuschnitte 12 können dann entsprechend laminiert und/oder zu den fertigen Bauteilen umgeformt werden, indem sie z. B. in einem Autoklaven unter einer bestimmten Temperatur und Druckbedingungen gebacken werden.

Insbesondere handelt es sich bei den Bauteilen um Kraftfahrzeugbauteile, insbesondere um sichtbare Kraftfahrzeugbauteile, beispielsweise besonders große Bauteile, die lediglich mit Klarlack beschichtet sind und/oder, wobei die Gewebestruktur visuell sichtbar ist.

Durch das Strecken wird es zum einen ermöglicht, dass ein optisch hervorragendes Erscheinungsbild der Oberfläche gewährleistet wird. Zum anderen können auch Krafteinträge in die einzelnen Rovings besser gelenkt werden, als es der Fall ist, wenn die einzelnen Rovings 4 gepresst, gedreht und/oder verzogen sind.

In Fig. 4 ist nicht dargestellt, dass im Zuge der Streckung auch eine visualisierte, insbesondere automatisiert visualisierte Beobachtung des mit Harz getränkten Fasermaterials stattfinden kann.

Es hat sich als günstig herausgestellt, dass während, vor oder nach dem Strecken eine Inspektion, insbesondere optische Inspektion, durchgeführt wird.

So kann instantan die Veränderung im Material beobachtet werden und z.B. die Dauer des Streckens und /oder andere der zuvor genannten Parameter (Erwärmen etc.) entsprechend variiert werden. Es kann inspiziert werden, inwieweit z.B. die Anzahl der Bereiche mit den unschönen Reflektionen unter einem vorgegebenen Grenzwert liegen, und/oder sonstige vorgegebene Eigenschaften bzw. Bedingungen durch das Strecken erfüllt sind. Es kann z.B. mit einem automatisierten Bildverarbeitungsprogramm die Oberfläche vor und nach dem Strecken inspiziert werden und der Streckprozess mittels einer Regelung automatisch so durchgeführt werden, dass die Anzahl der Bereiche mit den unschönen Reflektionen unter einem vorgegebenen Grenzwert liegen, und/oder sonstige vorgegebene Eigenschaften bzw. Bedingungen durch das Strecken erfüllt sind.

Neben den Schritten der automatisierten Inspektion in Verbindung mit dem Strecken können auch einzelne oder weitere Teile bzw. Schritte des Verfahrens automatisiert erfolgen, insbesondere mittels einer Regelung durchgeführt werden.

Zum Beispiel kann das Zuführen des Materials automatisiert erfolgen. Auch kann in einer automatischen Weise das Strecken, Erwärmen, Kühlen und/oder Entfernen des Materials aus der Streckvorrichtung erfolgen.

Wenn z.B. eine vorgefertigte Güte erreicht worden ist, kann die Streckzeit danach eingestellt werden.

Anders, als in dem Ausführungsbeispiel in Fig. 4 dargestellt, kann der Streckstation 1 nachgeschaltet auch einfach Aufrollstation sein, in der das gestreckte Material wieder auf eine Rolle aufgerollt wird und zur Weiterverarbeitung ausgeliefert wird.

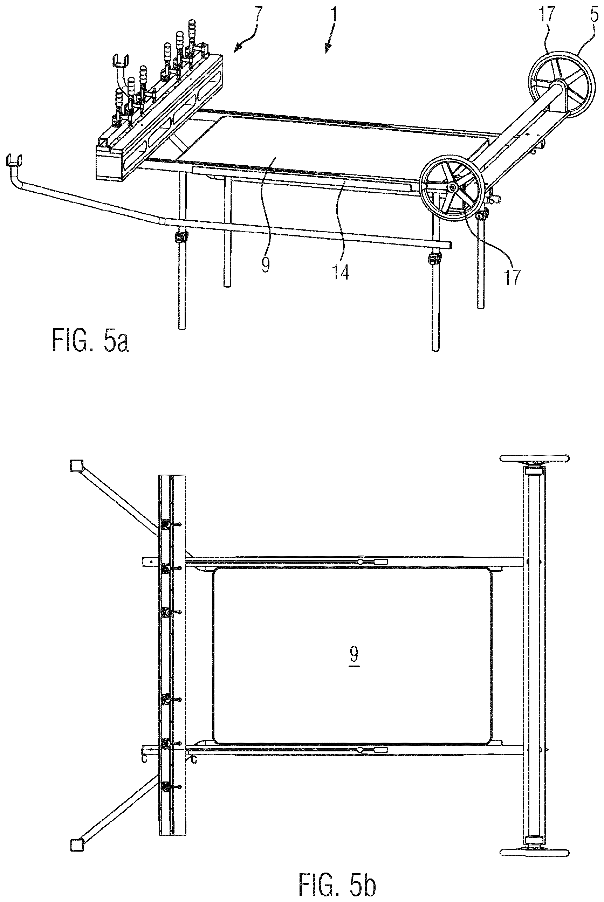

In Fig. 5a ist eine Schrägansicht einer Streckstation 1 dargestellt, die ähnlich der in Fig. 1a arbeitet. Die Streckstation ist nach Art eines Strecktisches aufgebaut.

Auf der in Fig. 5a dargestellten, linken Seite ist das Einspannelement 7 vorgesehen. Auf der in Fig. 5a dargestellten, rechten Seite ist das Streckelement 5 vorgesehen. Das Streckelement 5 ist im vorliegenden Fall ein in dessen Querschnitt rundes Rollelement mit zwei Rädern 17 an dessen Längsenden. Über die Räder 17 kann per Hand das Streckelement rotatorisch gedreht werden, wodurch das Material gestreckt wird.

Das Streckelement 5 ist an einem längsverschieblichen Schienenteil 14 gelagert. Genauso ist auch das Einspannelement 7 in dem längsverschieblichen Schienenteil 14 gelagert. So können die Abstände, an denen das mit Harz getränkte Fasermaterial 2 eingespannt wird, und der Ort, an dem das Streckelement 5 auf die Rovings 4 eiwirkt, selektiv justiert werden.

Fig. 5b zeigt eine Aufsicht auf die Ausführungsform aus Fig. 5a.

Mit Bezugszeichen 9 ist ein Plattenelement bezeichnet, das als Heizeinrichtung und auch als Kühlelement dient.

Das mit Harz getränkte Fasermaterial 2 wird so in die Streckstation 1 eingebaut, dass die Oberfläche an dem Plattenelement 9 anliegt oder aber in geringem Abstand von dem Plattenelement gespannt wird.

Hierdurch kann eine Erwärmung bzw. Kühlung des Materials im Zuge des Verfahrens gewährleistet werden.

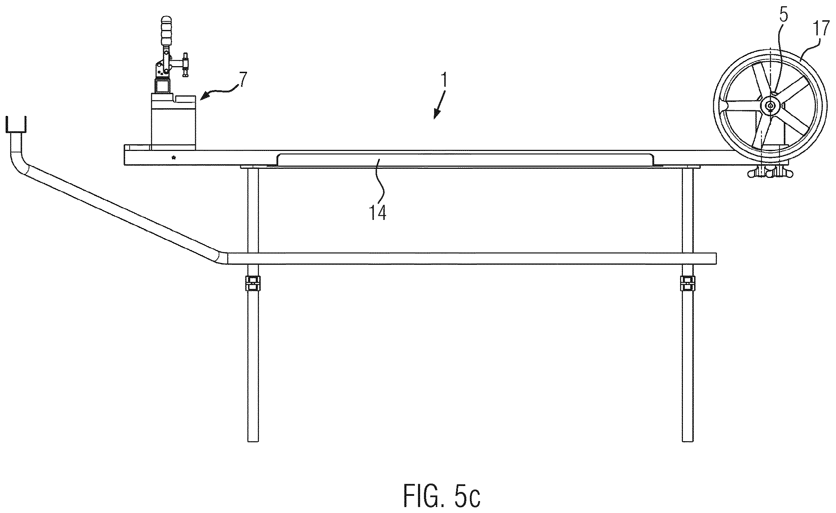

Figur 5c zeigt eine Querschnittsansicht der Streckstation aus Figur 5a.

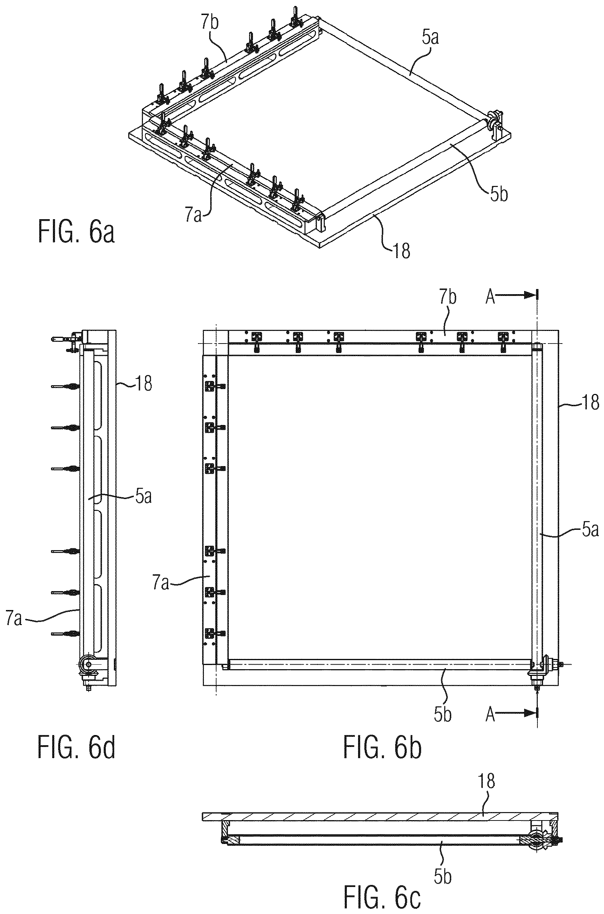

Fig. 6a zeigt ein weiteres Ausführungsbeispiel, das ähnlich dem Ausführungsbeispiel aus Fig. 3 funktioniert.

Bei diesem Ausführungsbeispiel sind auf einer Grundplatte 18, die im vorliegenden Fall quadratisch ist, im rechten Winkel zwei Streckelemente 5a, 5b vorgesehen, die als Rollelemente wie in Figur 1a ausgebildet sind.

Jeweils gegenüberliegend zu einer ersten Rolle ist ein erstes Einspannelement 7a und gegenüberliegend zu einer zweiten Rolle ist ein zweites Einspannelement 7b vorgesehen. Diese Einspannelemente weisen zwei einander gegenüberliegende Backen auf, zwischen denen die entsprechenden Enden des mit Harz getränkten Fasermaterials eingespannt werden können.

Nach Erwärmen des Materials kann dann über die Rollelemente die Streckung der Rovings in 90°-Richtung zueinander erfolgen. Neben der Ausrichtung bzw. Streckung in einem Winkel von 90° zueinander können, soweit zwei oder mehrere Streckelemente und/oder Einspannelemente vorgesehen sind, auch andere Winkel bzw. Winkelbereiche wie z.B. 80°, 60°, 30° abgedeckt werden. Die zuvor genannten Werte können jeweils für sich obere bzw. untere Grenze eines Winkelbereiches bilden.

Fig. 6b zeigt eine Aufsicht auf Vorrichtung aus Fig. 6a.

Fig. 6c zeigt eine Querschnittsansicht entlang der Linie B-B in Fig. 6b.

Fig. 6d zeigt eine Querschnittsansicht entlang der Linie A-A in Fig. 6b.

Soweit vorhergehend die einzelnen Ausführungsbeispiele beschrieben worden sind, können die einzelnen Elemente der Ausführungsbeispiele auch mit einzelnen Elementen von anderen Ausführungsbeispielen kombiniert werden, solange dies nicht objektiv unsinnig ist.

In den beschriebenen Vorrichtungen kann das erfindungsgemäße Verfahren durchgeführt werden.

Nach dem Strecken wird üblicherweise das Material in einem weiteren Schritt durch Hitzeeinwirkung und/oder Druckeinwirkung in seine Endform bzw. Endgestalt gebracht, so dass ein Bauteil hergestellt werden kann.

Das Bauteil kann ein Kraftfahrzeugbauteil, ein Flugzeugbauteil und auch jedes andere aus Faserverbundstoff gefertigte Bauteil sein.

Das Bauteil ist vorzugsweise ein Sichtkarbonbauteil, das z.B. lediglich mit Klarlack beschichtet ist bzw. wobei die Gewebestruktur visuell sichtbar ist.

Als Filament für die Rovings werden insbesondere Kohlefaserfilamente oder eine Mischung, die zumindest Kohlefasern enthält, verwendet. Es kann jedoch jeder andere Typ von Filamenten verwendet werden.

### Bezugszeichenliste

- 1: Streckstation
- 2: mit Harz getränktes Fasermaterial
- 3: überstehende Enden
- 4: Roving
- 5, 5a, 5b: Streckelement
- 6: entgegengesetztes Ende
- 7, 7a, 7b: Einspannelement
- 8: Rolle
- 9: Heizeinrichtung
- 10: Kühleinrichtung
- 11a, 11b: Schutzfolie
- 12: Zuschnitt
- 13: Entnahmestation
- 14: Schienenteil
- 15: Zuschneidestation
- 16: Roboter
- 17: Rad
- 18: Grundplatte
- L: Längsrichtung
- Q: Querrichtung

## Patentansprüche

1. Verfahren zur Herstellung eines faserverstärkten Bauteils mit einem Schritt
eines Bereitstellens eines mit Harz getränkten Fasermaterials (2) mit sich zumindest in eine Richtung nebeneinander erstreckenden Rovings (4),
und einem Schritt des Streckens des Fasermaterials (2), sodass sich die Rovings (4) in deren Längsrichtung ausrichten,
wobei das Strecken mittels Reibung durchgeführt wird, welche auf von dem mit Harz getränkten Fasermaterial (2) überstehenden Enden der sich in einer Richtung nebeneinander erstreckenden Rovings (4) ausgeübt wird,
wobei das mit Harz getränkte Fasermaterial (2) ein Gewebe aus Rovings (4) mit Schuss- und Kettfäden ist, wobei die überstehenden Enden der Rovings freigelegt werden, indem ein oder mehrere quer zu diesen Enden der Rovings verlaufende Schuss- oder Kettfäden entfernt werden,
wobei die überstehenden Enden freie Enden sind, welche frei von Fasermaterial abstehen und dieses begrenzen,
wobei während des Streckens im Wesentlichen keine vertikale Druckkraft auf den zu streckenden Abschnitt des Fasermaterials (2) ausgeübt wird;
wobei zumindest vor und/oder während des Streckens ein Erwärmen des Fasermaterials (2) durchgeführt wird, bei dem das Harz zumindest aufgeweicht wird;
und wobei die Reibung von einer Streckoberfläche eines Rollenelementes, welches in Längsrichtung der zu streckenden Rovings (4) gedreht wird, generiert wird, wobei die Rovings (4) frei auf der Streckoberfläche des Rollelements aufliegen.

2. Verfahren nach Anspruch 1, **dadurch gekennzeichnet, dass** das Fasermaterial mindest während des Streckens in einer im Wesentlichen planaren Konfiguration angeordnet ist; und/oder dass während des Streckens lediglich in einen einzigen Endbereich, oder zwei einander entgegengesetzte Endbereiche der entsprechenden Rovings (4) eine Streckkraft eingetragen wird.

3. Verfahren nach einem der vorherigen Ansprüche, **dadurch gekennzeichnet, dass** das Strecken bei den Schuss- und/oder Kettfäden angewendet wird, sodass sich die entsprechenden Rovings (4) in deren Längsrichtung ausrichten.

4. Verfahren nach einem der vorherigen Ansprüche, **dadurch gekennzeichnet, dass** die zu streckenden Rovings (4) an deren dem Ende, auf das Reibung ausgeführt wird, gegenüberliegenden Ende (6) fixiert werden; wobei insbesondere ein zylindrisches, ganz besonders bevorzugt rundes oder eckiges Rollelement verwendet wird; wobei das Rollelement insbesondere beheizt wird.

5. Verfahren nach Anspruch 1, **dadurch gekennzeichnet, dass** für das Strecken der Schussfäden ein von dem zum Strecken der Kettfäden unterschiedliches Streckelement (5, 5a, 5b) vorgesehen ist;
und/oder die Kettfäden gestreckt werden, bevor oder nachdem oder während die Schussfäden gestreckt werden.

6. Verfahren nach einem der vorherigen Ansprüche, **dadurch gekennzeichnet, dass** nach dem Strecken ein Kühlen des gestreckten mit Harz getränkten Fasermaterials (2) durchgeführt wird;
wobei insbesondere nach dem Strecken und/oder nach dem Kühlen ein aktives Entspannen des gestreckten mit Harz getränkten Fasermaterials (2) durchgeführt wird,
wobei das Entspannen insbesondere mittels Ultraschall und/oder mittels Rütteln durchgeführt wird.

7. Verfahren nach einem der vorherigen Ansprüche, **dadurch gekennzeichnet,**
**dass** vor dem Strecken eine auf dem mit Harz getränkten Fasermaterial (2) vorgesehene Schutzfolie (11a, 11b) entfernt wird und/oder, dass nach dem Strecken das gestreckte Fasermaterial (2) mit einer Schutzfolie (11a, 11b) abgedeckt wird; und/oder
**dass** das mit Harz getränkte Fasermaterial (2) von einer Rolle (8) oder als Bogen eines Zuschnitts zugeführt wird und/oder, dass das gestreckte Fasermaterial
auf eine Rolle aufgerollt wird;
wobei insbesondere die Rolle bzw. der Zuschnitt aus einem Lager mit einer Vielzahl von vorkonfektionierten mit Harz getränkten Fasermaterial Einheiten entnommen wird und einer Streckvorrichtung zugeführt wird.

8. Verfahren nach einem der vorherigen Ansprüche, **dadurch gekennzeichnet,**
**dass** vor, während und oder nach dem Strecken eine Inspektion, insbesondere optische Inspektion durchgeführt wird;
und/oder dass zumindest zwei der Verfahrensschritte automatisiert erfolgen.

9. Vorrichtung zur Durchführung des Verfahrens nach einem der vorherigen Ansprüche mit einem Streckelement (5, 5a, 5b), welches konfiguriert ist das Fasermaterial (2) zu strecken, sodass sich die Rovings (4) in deren Längsrichtung ausrichten,
wobei das Streckelement (5, 5a, 5b) durch ein Rollenelement gebildet wird, welches in Längsrichtung der zu streckenden Rovings (4) drehbar ist, so dass die Streckung durch Reibung geschieht, wenn die Rovings (4) frei auf dem Rollelement aufliegen,
wobei die Vorrichtung so konfiguriert ist, dass keine vertikale Druckkraft auf den zu streckenden Abschnitt des Fasermaterials ausgeübt wird.

10. Vorrichtung nach Anspruch 9, **dadurch gekennzeichnet, dass** ein Einspannelement (7, 7a, 7b) vorgesehen ist, welches konfiguriert ist die zu streckenden Rovings (4) an deren dem Ende auf das Reibung zur Streckung ausgeübt wird, gegenüberliegendem Ende zu fixieren.

11. Vorrichtung nach Anspruch 9, **dadurch gekennzeichnet, dass** zumindest zwei Streckelemente (5, 5a, 5b) vorgesehen sind, wobei ein erstes der zumindest zwei Streckelemente (5, 5a, 5b) konfiguriert ist Schussfäden des mit Harz getränkten Fasermaterials (2), welches ein Gewebe aus Rovings (4) mit Schuss- und Kettfäden ist, zu strecken, und ein zweites der zumindest zwei Streckelemente (5, 5a, 5b) konfiguriert ist Kettfäden des mit Harz getränkten Fasermaterials (2) zu strecken,
wobei insbesondere dem jeweiligen ersten und zweiten Streckelement (5, 5a, 5b) ein erstes bzw. zweites Einspannelement (7, 7a, 7b) gegenüberliegt.

12. Vorrichtung nach einem der Ansprüche 9 bis 11, **dadurch gekennzeichnet, dass** das Streckelement (5, 5a, 5b) und optional das Einspannelement (7, 7a, 7b) in einer Streckstation (1) vorgesehen sind und, dass die Vorrichtung einer der Streckstation (1) nachgeordneten Zuschneidestation (15) aufweist, welche konfiguriert ist aus dem gestreckten Fasermaterial (2) einen Fasermaterial Zuschnitt herzustellen, aus welchem das faserverstärkte Bauteil herstellbar ist.

## Claims

1. Method for manufacturing a fiber-reinforced component, comprising a step
of providing a resin-impregnated fiber material (2) with rovings (4) extending side by side in at least one direction,
and a step of
stretching the fiber material (2) so that the rovings (4) align in their longitudinal direction,
**wherein** the stretching is performed by means of friction exerted on ends of the rovings (4) extending side by side in one direction that protrude from the resin-impregnated fiber material (2),
wherein the resin-impregnated fiber material (2) is a fabric of rovings (4) with weft and warp threads, wherein the protruding ends of the rovings are exposed by removing one or more weft or warp threads running transversely to these ends of the rovings,
wherein the protruding ends are free ends which protrude freely from the fiber material and delimit it,
wherein during stretching, essentially no vertical compressive force is exerted on the section of the fiber material (2) to be stretched;
wherein, at least before and/or during stretching, the fiber material (2) is heated, whereby the resin is at least softened;
and wherein the friction is generated by a stretching surface of a roller element which is rotated in the longitudinal direction of the rovings (4) to be stretched, wherein the rovings (4) rest freely on the stretching surface of the roller element.

2. Method according to claim 1, **characterized in that** the fiber material (2) is arranged in a substantially planar configuration at least during stretching;
and/or that during stretching, a stretching force is applied only to a single end region or two opposite end regions of the corresponding rovings (4).

3. Method according to any of the previous claims, **characterized in that** the stretching is applied to the weft and/or warp threads so that the corresponding rovings (4) align in their longitudinal direction.

4. Method according to any of the previous claims, **characterized in that** the rovings (4) to be stretched are fixed at their end opposite the end (6) on which friction is applied; wherein, in particular, a cylindrical, most preferably round or angular rolling element is used; wherein the rolling element is, in particular, heated.

5. Method according to claim 1, **characterized in that** a stretching element (5, 5a, 5b) different from that used for stretching the warp threads is provided for stretching the weft threads;
and/or the warp threads are stretched before or after or during the stretching of the weft threads.

6. Method according to any of the previous claims, **characterized in that** after stretching, the stretched resin-impregnated fiber material (2) is cooled;
wherein, in particular, after stretching and/or after cooling, active relaxation of the stretched resin-impregnated fiber material (2) is performed,
wherein the relaxation is performed, in particular, by means of ultrasound and/or by means of vibration.

7. Method according to one of the preceding claims, **characterized in that**
a protective film (11a, 11b) provided on the resin-impregnated fiber material (2) is removed before stretching and/or that the stretched fiber material (2) is covered with a protective film (11a, 11b) after stretching; and/or
that the resin-impregnated fiber material (2) is fed from a roll (8) or as a sheet of a blank and/or that the stretched fiber material is wound onto a roll;
wherein, in particular, the roll or blank is taken from a storage facility containing a plurality of preassembled resin-impregnated fiber material units and fed to a stretching device.

8. Method according to one of the preceding claims, **characterized in that** an inspection, in particular an optical inspection, is carried out before, during, and/or after stretching;
and/or that at least two of the process steps are performed automatically.

9. Device for carrying out the process according to one of the previous claims, with a stretching element (5, 5a, 5b) which is configured to stretch the fiber material (2) so that the rovings (4) align themselves in their longitudinal direction,
wherein the stretching element (5, 5a, 5b) is formed by a roller element which is rotatable in the longitudinal direction of the rovings (4) to be stretched, so that the stretching occurs by friction when the rovings (4) rest freely on the roller element, wherein the device is configured such that no vertical pressure force is exerted on the section of the fiber material to be stretched.

10. Device according to claim 9, **characterized in that** a clamping element (7, 7a, 7b) is provided, which is configured to fix the rovings (4) to be stretched at their end opposite the end on which friction is exerted for stretching.

11. Device according to claim 9, **characterized in that** at least two stretching elements (5, 5a, 5b) are provided, wherein a first of the at least two stretching elements (5, 5a, 5b) is configured to stretch weft threads of the resin-impregnated fiber material (2), which is a fabric made of rovings (4) with weft and warp threads, and a second of the at least two stretching elements (5, 5a, 5b) is configured to stretch warp threads of the resin-impregnated fiber material (2),
wherein, in particular, the respective first and second stretching elements (5, 5a, 5b) is opposed by a first or second clamping element (7, 7a, 7b).

12. Device according to one of claims 9 to 11, **characterized in that** the stretching element (5, 5a, 5b) and optionally the clamping element (7, 7a, 7b) are provided in a stretching station (1) and that the device has a cutting station (15) downstream of the stretching station (1), which is configured to produce a fiber material blank from the stretched fiber material (2), from which the fiber-reinforced component can be manufactured.

## Revendications

1. Procédé de fabrication d'un composant renforcé de fibres, comprenant une étape consistant à fournir un matériau à base de fibres (2) imprégné de résine et comprenant des mèches (4) s'étendant côte à côte au moins dans une direction, et une étape consistant à étirer le matériau à base de fibres (2) de sorte que les mèches (4) s'alignent dans leur direction longitudinale,
dans lequel l'étirage est mis en œuvre au moyen d'une friction exercée sur les extrémités saillantes des mèches (4), s'étendant côte à côte dans une direction, du matériau à base de fibres (2) imprégné de résine,
dans lequel le matériau à base de fibres (2) imprégné de résine est un tissu constitué de mèches (4) avec des fils de trame et de chaîne,
dans lequel les extrémités saillantes des mèches sont exposées en enlevant un ou plusieurs fil(s) de trame ou de chaîne s'étendant transversalement par rapport aux dites extrémités des mèches, les extrémités saillantes étant des extrémités libres qui font saillie à partir du matériau à base de fibres et le délimitent,
dans lequel aucune force de compression verticale n'est essentiellement exercée sur la partie à étirer du matériau à base de fibres (2) pendant l'étirage ;
dans lequel, au moins avant et/ou pendant l'étirage, un chauffage du matériau à base de fibres (2) est mis en œuvre, lors duquel la résine est au moins ramollie ; et dans lequel la friction est générée par une surface d'étirage d'un élément formant rouleau qui est entrainé en rotation dans le sens longitudinal des mèches (4) à étirer, dans lequel les mèches (4) reposent librement sur la surface d'étirage de l'élément formant rouleau.

2. Procédé selon la revendication 1, **caractérisé en ce que** le matériau à base de fibres (2) est agencé dans une configuration essentiellement plane au moins pendant l'étirage ; et/ou **en ce que**, pendant l'étirage, une force d'étirage n'est appliquée que dans une seule région terminale ou dans deux régions terminales opposées des mèches (4) correspondantes.

3. Procédé selon l'une quelconque des revendications précédentes, **caractérisé en ce que** l'étirage est appliqué aux fils de trame et/ou de chaîne, de sorte que les mèches (4) correspondantes s'alignent dans leur direction longitudinale.

4. Procédé selon l'une quelconque des revendications précédentes, **caractérisé en ce que** les mèches (4) à étirer sont immobilisées au niveau de leurs extrémités (6) opposées à l'extrémité sur laquelle la friction est mise en oeuvre ;
dans lequel un élément formant rouleau, cylindrique, en particulier de manière préférée rond ou anguleux, est utilisé ; dans lequel l'élément formant rouleau est en particulier chauffé.

5. Procédé selon la revendication 1, **caractérisé en ce qu'**un élément d'étirage (5, 5a, 5b) différent de celui utilisé pour étirer les fils de chaîne est prévu pour étirer les fils de trame ;
et/ou **en ce que** les fils de chaîne sont étirés avant ou après ou pendant l'étirage des fils de trame.

6. Procédé selon l'une quelconque des revendications précédentes, **caractérisé en ce que,** après l'étirage, un refroidissement du matériau à base de fibres (2) imprégné de résine et étiré est mis en œuvre ;
dans lequel, en particulier après l'étirage et/ou le refroidissement, une relaxation active du matériau à base de fibres (2) imprégné de résine et étiré est mise en œuvre,
dans lequel la relaxation est en particulier mise en œuvre au moyen d'ultrasons et/ou de secousses.

7. Procédé selon l'une quelconque des revendications précédentes, **caractérisé en ce que,**
avant l'étirage, un film protecteur (11a, 11b) fourni sur le matériau à base de fibres (2) imprégné de résine est retiré et/ou **en ce que**, après l'étirage, le matériau à base de fibres (2) étiré est recouvert avec un film protecteur (11a, 11b) ; et/ou
**en ce que** le matériau à base de fibres (2) imprégné de résine est alimenté par un rouleau (8) ou sous forme de feuillets d'une découpe et/ou **en ce que** le matériau à base de fibres étiré est enroulé sur un rouleau ;
dans lequel le rouleau ou la découpe est en particulier prélevé(e) à partir d'un stockage comprenant une pluralité d'unités préconfectionnées de matériau à base de fibres imprégné de résine et est acheminé(e) jusqu'à un dispositif d'étirage.

8. Procédé selon l'une quelconque des revendications précédentes, **caractérisé en ce que**
une inspection, en particulier optique, est mise en œuvre avant, pendant et/ou après l'étirage ;
et/ou **en ce que** au moins deux des étapes de procédé sont automatisées.

9. Dispositif de mise en œuvre du procédé selon l'une quelconque des revendications précédentes, comprenant un élément d'étirage (5, 5a, 5b) qui est configuré pour étirer le matériau à base de fibres (2) de sorte que les mèches (4) s'alignent dans leur direction longitudinale,
dans lequel l'élément d'étirage (5, 5a, 5b) est formé par un élément formant rouleau qui peut tourner dans la direction longitudinale des mèches (4) à étirer, de sorte que l'étirage se produit par friction lorsque les mèches (4) reposent librement sur l'élément formant rouleau,
dans lequel le dispositif est configuré de sorte qu'aucune force de pression verticale n'est exercée sur la partie à étirer du matériau à base de fibres.

10. Dispositif selon la revendication 9, **caractérisé en ce qu'**un élément de serrage (7, 7a, 7b) est prévu, qui est configuré pour immobiliser les mèches (4) à étirer au niveau de leurs extrémités opposées à l'extrémité sur laquelle est exercée la friction en vue de l'étirage.

11. Dispositif selon la revendication 9, **caractérisé en ce qu'**au moins deux éléments d'étirage (5, 5a, 5b) sont prévus, dans lequel un premier des au moins deux éléments d'étirage (5, 5a, 5b) est configuré pour étirer des fils de trame du matériau à base de fibres (2) imprégné de résine, qui est un tissu à base de mèches (4) avec des fils de trame et de chaîne, et un deuxième des au moins deux éléments d'étirage (5, 5a, 5b) est configuré pour étirer des fils de chaîne du matériau à base de fibres (2) imprégné de résine,
dans lequel un premier ou un deuxième élément de serrage (7, 7a, 7b) se situe en particulier à l'opposé des premier et deuxième éléments d'étirage (5, 5a, 5b) respectifs.

12. Dispositif selon l'une quelconque des revendications 9 à 11, **caractérisé en ce que** l'élément d'étirage (5, 5a, 5b) et, en option, l'élément de serrage (7, 7a, 7b) sont fournis au sein d'un poste d'étirage (1) et **en ce que** le dispositif présente un poste de coupe (15) situé en aval du poste d'étirage (1), lequel poste de coupe est configuré pour produire, à partir du matériau à base de fibres (2) étiré, une découpe de matériau à base de fibres à partir de laquelle le composant renforcé de fibres peut être fabriqué.
